(19) Europäisches Patentamt
European Patent Office
Office européen des brevets

(11) **EP 4 641 916 A1**

(12) **EUROPÄISCHE PATENTANMELDUNG**

(43) Veröffentlichungstag:
**29.10.2025 Patentblatt 2025/44**

(21) Anmeldenummer: **25171515.7**

(22) Anmeldetag: **19.04.2025**

(51) Internationale Patentklassifikation (IPC):
**H02P 21/14** *(2016.01)* **H02P 23/14** *(2006.01)*
**H02P 29/64** *(2016.01)*

(52) Gemeinsame Patentklassifikation (CPC):
**H02P 29/64; H02P 21/14; H02P 23/14**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **25.04.2024 LU 507046**

(71) Anmelder: **WILO SE
44263 Dortmund (DE)**

(72) Erfinder:
• **Termühlen, Christoph
Dortmund (DE)**
• **Fiedler, Jens Olav
Dortmund (DE)**

(74) Vertreter: **Cohausz Hannig Borkowski Wißgott
Patentanwaltskanzlei GbR
Grafenberger Allee 337a
40235 Düsseldorf (DE)**

(54) **BESTIMMUNG DER TEMPERATUR DER STATORWICKLUNG EINES ELEKTROMOTORS**

(57) Die Erfindung betrifft ein Verfahren zur Bestimmung der Temperatur ($\vartheta_{Stator}$) der Statorwicklung eines vektoriell geregelten Elektromotors, indem einer Stellgröße ($i_d$) ein periodisches Anregungssignal ($f(t)$) mit einer Anregungsfrequenz ($f_A$) überlagert wird. Währenddessen wird aus Motorsignalen ($x(t)$), zumindest umfassend eine erste und zweite Spannungskomponente ($u_d$, $u_q$), eine erste und zweite Stromkomponente ($i_d$, $i_q$) und eine Kreisfrequenz ($\omega_{el}$), jeweils ein Satz ($T_x$) von Signalmerkmalen ($\{x_0, x_{1,sin}, x_{1,cos}\}$) bestimmt wird, umfassend den Gleichanteil ($x_0$), den Anteil des Betrags der Grundschwingungsamplitude ($x_{1,sin}$) bei der Anregungsfrequenz ($f_A$) in Phase mit dem Anregungssignal ($f(t)$) sowie den Anteil des Betrags der Grundschwingungsamplitude ($x_{1,cos}$) bei der Anregungsfrequenz ($f_A$) 90° phasenversetzt zum Anregungssignal ($f(t)$) in dem jeweiligen Motorsignal ($x(t)$). Aus einem Gleichungssystem wird dann unter Verwendung der Signalmerkmale ($\{x_0, x_{1,sin}, x_{1,cos}\}$) ein Satz von Motorparametern (Rs, $L_d$, $L_q$, $\Psi_{pm}$) berechnet, der den elektrischen Statorwiderstand ($R_S$) umfasst. Die Statorwicklungstemperatur ($\vartheta_{Stator}$) wird anschließend aus einem Temperaturmodell ($\vartheta_{Stator}(R_s)$), das die Statorwicklungstemperatur ($\vartheta_{Stator}$) mit dem Statorwiderstand ($R_s$) verknüpft, berechnet oder unter Verwendung eines Funktionsapproximators (6) geschätzt, der hierzu mindestens den Satz von Motorparametern ($R_S$, $L_d$, $L_q$, $\Psi_{pm}$) und die Sätze ($T_x$) der Signalmerkmale ($\{x_0, x_{1,sin}, x_{1,cos}\}$) verwendet.

Fig. 3

## Beschreibung

Die Erfindung betrifft ein Verfahren zur Bestimmung der Temperatur der Statorwicklung eines Elektromotors, insbesondere eines permanentmagnetischen Synchronmotors, der von einer Motorregelung vektoriell in einem mit einer Kreisfrequenz rotierenden Koordinatensystem unter Verwendung einer ersten und zweiten Stromkomponente und einer ersten und zweiten Spannungskomponente, die jeweils in Richtung einer der Koordinatenachsen zeigen, geregelt wird. Ferner betrifft die Erfindung einen Elektromotor, der zur Ausführung des Verfahrens eingerichtet ist.

Eine vektorielle Regelung von Elektromotoren der genannten Art ist allgemein bekannt, beispielsweise als sogenannte feldorientierten Regelung bei permanentmagnetischen Synchronmotoren. Die zur Regelung verwendeten Stromkomponenten werden aufgrund der jeweiligen Koordinatenachse, in deren Richtung sie in dem Koordinatensystem zeigen, benannt, z.B. als $i_d$- und $i_q$-Strom. Korrespondierend hierzu werden die Spannungskomponenten bezeichnet, z.B. als $u_d$- und $u_q$-Spannung. Bei dieser Regelung wird ein mit einer Drehfrequenz rotierender Spannungsraumzeiger, der aus der ersten Spannungskomponente $u_d$ in Richtung der ersten Koordinatenachse (d-Achse) und der zweiten Spannungskomponente $u_q$ in Richtung der zweiten Koordinatenachse (q-Achse) gebildet ist, so eingestellt, dass sich ein gewünschter, mit der Drehfrequenz rotierender Stromraumzeiger einstellt, der aus der ersten Stromkomponente $i_d$ in Richtung der ersten Koordinatenachse (d-Achse) und der zweiten Stromkomponente $i_q$ in Richtung der zweiten Koordinatenachse (q-Achse) gebildet ist.

Die Kenntnis der Statorwicklungstemperatur ist in vielen Anwendungen erforderlich, um eine Überhitzung des Motors zu verhindern und/ oder die Regelung an die Leistung anzupassen. Dies ist besonders in jenen Anwendungen von Bedeutung, in denen die Temperatur des Motors nicht allein durch seine Eigenerwärmung bedingt ist, sondern auch von externen Faktoren abhängt, wie beispielsweise der Umgebungstemperatur oder der Temperatur eines Fördermediums, das den Motor durchströmt, wie dies bei Elektromotoren in Nassläuferbauweise der Fall ist, bei denen der Rotor im Fördermedium dreht. Gerade in Heizungssystemen mit hohen Medientemperaturen besteht die Möglichkeit, dass der vom Heizmedium durchströmte Nassläufermotor bereits stark erwärmt ist. Es besteht dann im Falle einer erhöhten Motor- bzw. Pumpleistung die Gefahr, dass die hierbei erzeugte, zusätzliche Eigenerwärmung des Motors zu einem Überschreiten der zulässigen Maximaltemperatur im Motor führt, was eine Überhitzung und gegebenenfalls eine Beschädigung des Motors zur Folge haben kann.

Andererseits ist es für einen optimalen Betriebs eines permanentmagnetischen Synchronmotors sinnvoll, das thermische Betriebsfenster bis zur zulässigen dauerhaften Maximaltemperatur auszunutzen, und nicht den Motor zu früh abzuregeln bzw. in seiner Leistung zu reduzieren. Ziel ist deshalb stets eine sichere Ausnutzung des zur Verfügung stehenden Temperatur-Arbeitsbereichs, was die Kenntnis der Statorwicklungstemperatur voraussetzt.

Typischerweise werden Elektromotoren in thermisch kritischen Anwendungen mit Temperatursensoren ausgestattet, die direkt zwischen die Wicklungen des Stators gebracht werden. Diese Temperatursensoren messen somit direkt die Temperatur der Statorwicklung. Durch eine geeignete Regelungsfunktion wird dann in Abhängigkeit der aktuell gemessenen Statorwicklungstemperatur beispielsweise die Motordrehzahl, die maximale Leistung, das zulässige Drehmoment, oder der Motorstrom derart limitiert, dass die Eigenerwärmung reduziert wird, um das thermische Betriebsfenster des Motors nicht zu verlassen. Derartige Temperatursensoren bilden jedoch ein separates Bauteil, das zu Kosten führt und einen entsprechenden Montageaufwand erfordert.

Es ist bekannt, die Temperatur eines Elektromotors rechnerisch anhand des elektrischen Widerstands des Stators zu ermitteln. Beispielsweise beschreibt die US-Patentanmeldung US 20120306422 A1 ein Verfahren zum Bestimmen der Temperatur eines Elektromotors aufgrund eines in den Strom der d-Achse eingespeisten Wechselstroms mit einer Frequenz, die mit einer Regelungsfrequenz des Elektromotors synchronisiert ist, das Bestimmen eines Gleichstrom (DC-Phasenstroms), das Bestimmen des Widerstands der Statorwicklung aus dem Gleichstrom und einer angelegten Spannung und das Bestimmen der Temperatur des Elektromotors als Funktion des Widerstands der Statorwicklung.

Eine Berechnung des Statorwiderstands einer elektrischen Maschine aus dem Quotienten aus Spannungsmittelwert und Strommittelwert und anschließende fortlaufende Schätzung der Wicklungstemperatur anhand des Statorwiderstands ist außerdem in der europäischen Patentanmeldung EP 2743713A1 beschrieben. Auch beschreibt die europäische Patentanmeldung EP 3076543 A1 ein Verfahren, bei dem die Wicklungstemperatur aus dem Statorwiderstand ermittelt wird.

Andere Verfahren, wie beispielsweise das in der US-Anmeldung US 20040257011 A1 beschriebene Verfahren zur Bestimmung der Rotortemperatur in einer permanentmagneterregten, feldorientiert-geregelten Synchronmaschine, verwenden ein thermisches Modell der Synchronmaschine als Beobachter, um anhand der Ströme in Richtung der d- und q Achse eine Motortemperatur zu schätzen.

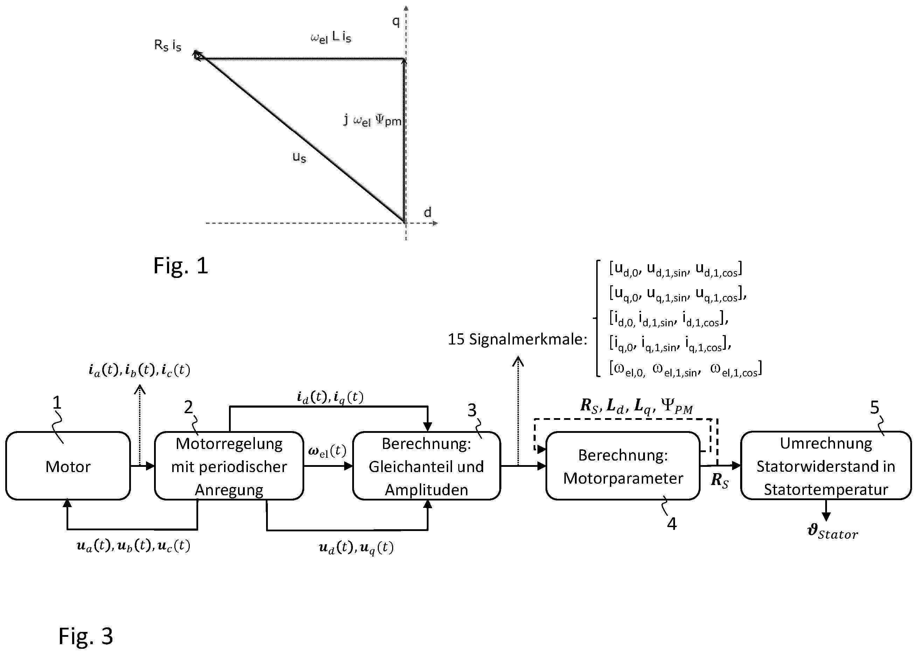

Die im Stand der Technik bekannten Verfahren sind im Allgemeinen nicht sensitiv genug, um die Statorwicklungstemperatur mit hoher Genauigkeit zu ermitteln. Dies ist vor allem dadurch bedingt, dass der elektrische Statorwiderstand im Vergleich zur Induktivität des Stators sehr klein ist. Dies veranschaulicht das Zeigerdiagramm in Figur 1, wonach der Spannungsabfall Rs·is am Statorwiderstand Rs bei einem Statorstrom is und der elektrischen Kreisfrequenz $\omega_{el}$ nur

einem Bruchteil des Spannungsabfalls $\omega_{el}\cdot L\cdot i_s$ an der Induktivität L und auch nur einem Bruchteil der vom Rotor induzierten Spannung $\omega_{el}\cdot\Psi_{PM}$ ($\Psi_{PM}$: verketteter magnetischer Fluss) entspricht. Des Weiteren ist die Messung der Statorspannungen und der Statorströme gewissen Einflüssen unterworfen, die die Genauigkeit der Messung beeinträchtigen, wie beispielsweise induktive Effekte, rückinduzierte Spannung und Übergangseffekte durch das Schalten der Halbleiter im Wechselrichter.

Aufgabe der vorliegenden Erfindung ist es, ein alternatives Verfahren bereitzustellen, um die Statorwicklungstemperatur ohne die Verwendung eines physischen Temperatursensors möglichst genau zu ermitteln.

Diese Aufgabe wird durch ein Verfahren mit den Merkmalen von Anspruch 1 gelöst. Vorteilhafte Ausprägungen und Weiterbildungen sind in den Unteransprüchen angegeben und werden nachfolgend beschrieben.

Die Grundidee des erfindungsgemäßen Verfahrens liegt darin, nicht den Statorwiderstand Rs als solchen zur Berechnung der Statorwicklungstemperatur zu verwenden, sondern die temperaturbedingte Änderung des Statorwiderstands Rs. Hierzu wird eine besondere Signalanalyse angewendet, um die temperaturabhängige Änderung des Statorwiderstands Rs zu isolieren.

Erfindungsgemäß wird vorgeschlagen, dass während der vektoriellen Regelung des Elektromotors einer Stellgröße ein periodisches Anregungssignal f(t) mit einer Anregungsfrequenz $f_A$ überlagert wird. Hierdurch wird das Anregungssignal f(t) quasi in den Motor insbesondere in die Statorwicklung eingespeist. Die erste und zweite Spannungskomponente $u_d$, $u_q$, die erste und zweite Stromkomponente $i_d$, $i_q$ und Kreisfrequenz $\omega_{el}$ bilden Motorsignale x, aus denen während des Anregungssignals f(t) über wenigstens eine Periode T des Anregungssignals f(t) hinweg jeweils ein Satz $T_x$ von Signalmerkmalen $\{x_0, x_{1,sin}, x_{1,cos}\}$ bestimmt wird, umfassend

- den Gleichanteil $x_0$,
- den Anteil des Betrags $x_{1,sin}$ der Grundschwingungsamplitude bei der Anregungsfrequenz $f_A$ in Phase mit dem Anregungssignal f(t) sowie
- den Anteil des Betrags $x_{1,cos}$ der Grundschwingungsamplitude bei der Anregungsfrequenz $f_A$ 90° phasenversetzt zum Anregungssignal f(t)

in dem jeweiligen Motorsignal x(t), mit x(t) = $\{u_d, u_q, i_d, i_q, \omega_{el}\}$.

Die erste und zweite Spannungskomponente $u_d$, $u_q$, die erste und zweite Stromkomponente $i_d$, $i_q$ und die Kreisfrequenz $\omega_{el}$ bilden zeitliche Motorsignale, entweder zeitkontinuierliche Motorsignale x(t) oder zeitdiskrete Motorsignale x(n). Der Einfachheit halber wird nachfolgend nur die zeitkontinuierliche Darstellung verwendet, sofern nicht ausdrücklich die zeitdiskrete Darstellung erläutert wird.

Der Gleichanteil $x_0$ und die beiden Amplituden $x_{1,sin}$, $x_{1,cos}$ sind charakteristische Merkmale der Motorsignale x(t), die erfindungsgemäß ermittelt werden. Genau betrachtet, handelt es sich um Merkmale, die das jeweilige Motorsignal x(t) im Spektralbereich beschreiben, d.h. um spektrale Signalmerkmale. Jeder Satz $T_x$ besteht aus drei Signalmerkmalen $\{x_0, x_{1,sin}, x_{1,cos}\}$ und bildet somit ein Tripel $T_x = \{x_0, x_{1,sin}, x_{1,cos}\}$. Gemäß einem Aspekt der Erfindung ist somit vorgesehen, mit dem Anregungssignal f(t) eine periodische Schwankung zumindest einer elektrischen Motorgröße zu provozieren, und dann eine spektrale Signalanalyse der elektrischen Motorgrößen x(t) durchzuführen.

Aus einem Gleichungssystem wird dann unter Verwendung der (spektralen) Signalmerkmale $\{x_0, x_{1,sin}, x_{1,cos}\}$ ein Satz von Motorparametern berechnet, wobei dieser Satz den elektrischen Statorwiderstand Rs umfasst.

In einer ersten Ausführungsvariante wird die Statorwicklungstemperatur $\vartheta$Stator anschließend aus einem Temperaturmodell $\vartheta$Stator($R_s$), das die Statorwicklungstemperatur $\vartheta$Stator mit dem Statorwiderstand $R_s$ verknüpft, berechnet. Dabei kann die Verknüpfung linear sein. In einer zweiten Ausführungsvariante wird die Statorwicklungstemperatur $\vartheta$Stator unter Verwendung eines Funktionsapproximators geschätzt, der hierzu mindestens den Satz von Motorparametern und die Sätze $T_x$ der Signalmerkmale $\{x_0, x_{1,sin}, x_{1,cos}\}$ verwendet.

Die Statorwicklungstemperatur $\vartheta$Stator kann auf diese Weise sehr genau ermittelt werden und zwar ohne Verwendung eines physischen Temperatursensors, d.h. eines elektrischen Bauteils. Dies reduziert nicht nur die Kosten des Elektromotors, sondern trägt auch zur Nachhaltigkeit bei, da weniger elektrische Bauteile zu entsorgen sind.

Das Verfahren kann in einer die Motorreglung ausführenden Software implementiert werden. Diese kann Teil eines Motorreglers sein. Sie kann insbesondere in einem nichtflüchtigen Speicher des Motorreglers abgespeichert sein und auf einem Prozessor des Motorreglers ausgeführt werden.

Die Erfindung betrifft deshalb auch einen Elektromotor, insbesondere einen permanentmagnetischen Synchronmotor, mit einer Steuerungselektronik mit einem Motoregler zur vektoriellen Regelung des Elektromotors, der wenigstens einen Prozessor und einen Speicher mit einem darauf gespeicherten Programm umfasst und eingerichtet ist, durch Ausführung des Programms auf dem Prozessor die Statorwicklungstemperatur des Elektromotors gemäß dem erfindungsgemäßen Verfahren zu bestimmen.

In einer bevorzugten Ausführungsvariante treibt der Elektromotor eine Kreiselpumpe, insbesondere als Nassläufermotor an, so dass die Erfindung auch ein Kreiselpumpenaggregat umfassend eine Kreiselpumpe und einen diese antreibenden Elektromotor betrifft, der wie vorstehend beschrieben, ausgebildet ist.

Bevorzugt wird die Stellgröße im Betrieb des Elektromotors dauerhaft mit dem Anregungssignal beaufschlagt. Somit kann die Statorwicklungstemperatur jederzeit berechnet werden und steht somit für die Regelung und/ oder Steuerung des Elektromotors, beispielsweise für eine Leistungsbegrenzung jederzeit zur Verfügung.

Damit die induktiven Widerstände ($X_L = 2 \cdot \pi \cdot f_A \cdot L$) sehr klein werden im Verhältnis zum ohmschen Spannungsabfall am Statorwiderstand Rs sollte die Anregungsfrequenz $f_A$ möglichst klein, vorzugsweise kleiner als 10Hz, insbesondere sogar kleiner als 1Hz gewählt werden. Beispielsweise kann die Anregungsfrequenz $f_A$ 0,5Hz betragen. Somit lässt sich der Fokus auf den Spannungsabfall am Statorwiderstand Rs legen.

Die Amplitude a des Anregungssignals $f(t)$ kann beispielsweise zwischen 1% und 20% des Nennwerts der Stellgröße betragen.

Idealerweise wird als periodisches Anregungssignal $f(t)$ ein sinusförmiges Signal verwendet. Dies hat den Vorteil, dass sich die spektrale Energie im Wesentlichen auf die Anregungsfrequenz $f_A$ beschränkt und die berechneten Amplituden maximal sind. Insgesamt kann die Anregungsfunktion f(t) mathematisch beispielsweise durch die Funktion f(t) = a · sin($2\pi f_A \cdot t$) beschrieben werden.

In einer Ausführungsvariante kann vorgesehen sein, dass die Signalmerkmale jeweils durch eine Integration der Motorsignale x(t) ermittelt werden. Denn der Gleichanteil $x_0$ ist durch den arithmetischen Mittelwert des jeweiligen Motorsignals x(t) gebildet. Ferner kann der Anteil des Betrags $x_{1,\sin}$ der Grundschwingungsamplitude bei der Anregungsfrequenz $f_A$ in Phase mit dem Anregungssignal $f(t)$ durch eine SinusTransformation bzw. mit Hilfe des Sinus-Integrals, und der Anteil des Betrags $x_{1,\cos}$ der Grundschwingungsamplitude bei der Anregungsfrequenz $f_A$ 90° phasenversetzt zum Anregungssignal f(t) durch eine Cosinus-Transformation bzw. mit Hilfe des Cosinus-Integrals ermittelt werden. Mathematisch darstellbar ist dies durch die Formeln:

$$x_0 = \frac{1}{T} \int_{t_0}^{t_0+T} x(t)\, dt$$

$$x_{1,\sin} = \frac{2}{T} \int_{t_0}^{t_0+T} x(t) \cdot \sin(2\pi f_A t)\, dt$$

$$x_{1,\cos} = \frac{2}{T} \int_{t_0}^{t_0+T} x(t) \cdot \cos(2\pi f_A t)\, dt$$

in denen

$x_0$      der Gleichanteil des Motorsignals x(t),

$x_{1,sin}$      der Anteil des Betrags der Grundschwingungsamplitude des Motorsignals x(t) bei der Anregungsfrequenz $f_A$ in Phase mit dem Anregungssignal $f(t)$,

$x_{1,cos}$      der Anteil des Betrags der Grundschwingungsamplitude des Motorsignals x(t) bei der Anregungsfrequenz $f_A$ 90° phasenversetzt zum Anregungssignal $f(t)$,

$T$      die Periode des Anregungssignals $f(t)$,

$f_A$      die Frequenz des Anregungssignals $f(t)$ und

$t_0$      der Startzeitpunkt der Integration ist.

Als Motorsignal x(t) ist hier die erste oder zweite Spannungskomponente $u_d$, $u_q$, die erste oder zweite Stromkomponente $i_d$, $i_q$ oder die Kreisfrequenz $\omega_{el}$ einzusetzen, so dass die Sätze $T_x$ von Signalmerkmalen {$x_0$, $X_{1,\sin}$, $x_{1,\cos}$} mit x(t) = {$u_d$, $u_q$, $i_d$, $i_q$, $\omega_{el}$} die Tripel $T_{ud} = \{u_{d,0}, u_{d,1,sin}, u_{d,1,cos}\}$, $T_{uq} = \{U_{q,0}, U_{q,1,sin}, U_{q,1,cos}\}$, $T_{id} = \{i_{d,0}, i_{d,1,sin}, i_{d,1,cos}\}$, $T_{iq} = \{i_{q,0}, i_{q,1,sin}, i_{q,1,cos}\}$ und $T\omega_{el} = \{\omega_{el,0}, \omega_{el,1,sin}, \omega_{el,1,cos}\}$ sind.

Die Berechnung muss allerdings nicht zwingend zeitkontinuierlich erfolgen. Sie kann auch zeitdiskret, d.h. für zeitdiskrete Motorsignale x(n) erfolgen, was insbesondere im Hinblick auf den signaltechnischen Ablauf des Verfahrens auf dem Prozessor der Motorregelung sinnvoll ist. In diesem Fall werden die Signalmerkmale durch eine numerische Integration berechnet, mathematisch darstellbar durch die Formeln:

$$x_0 = \frac{1}{N} \sum_{k}^{k+N} x_k$$

$$x_{1,sin} = \frac{2}{N} \sum_{k}^{k+N} x_k \cdot \sin\left(2\,\pi\,f_A \frac{k}{N}\right)$$

$$x_{1,cos} = \frac{2}{N} \sum_{k}^{k+N} x_k \cdot \cos\left(2\,\pi\,f_A \frac{k}{N}\right)$$

in denen

k     ein zeitdiskreter Laufindex der Zeitvariable t ist und $x_k = x(k \cdot \Delta t)$ gilt, wobei $\Delta t$ die diskrete Schrittweite des Abtastsystems ist, und

N     die ganzzahlige Anzahl diskreter Abtastzeitpunkte in einer Periode ist, mit $N = f_A / \Delta t$.

Da die berechneten Integrale (zeitkontinuierlich oder zeitdiskret) die ersten Terme einer Fourier-Reihenentwicklung sind mit der Anregungsfrequenz als Grundfrequenz, kann anstelle einer Berechnung der einzelnen Integrale eine Fourier-Transformation der Motorsignale x(t) durchgeführt werden, welche alle drei Signalmerkmale $x_0$, $x_{1,sin}$, $x_{1,cos}$ direkt liefert. Da eine Fourier-Transformation jedoch auch die Beträge der Amplituden aller anderen spektralen Frequenzanteile liefert, die Vielfache der Grundfrequenz sind, sind aus dem Ergebnis der Fourier-Transformation anschließend noch der Gleichanteil und die beiden gesuchten Amplitudenbeträge zu extrahieren.

In der zeitdiskreten Signalverarbeitung kann die Fourier-Transformation mit Hilfe der diskreten Fourier-Transformation (DFT) oder einer schnellen Fourier-Transformation (FFT) durchgeführt werden, die auf die über eine Periode T zu den Zeitpunkten n (mit n = {1, ... , N}) erfassten, zeitdiskreten Werte des jeweiligen Motorsignals x(n) angewendet wird.

Die Sätze $T_x$ von Signalmerkmalen $\{x_0, x_{1,sin}, x_{1,cos}\}$ können also entweder über die o.g. Integrale, mit Hilfe einer Fourier-Transformation, insbesondere einer diskreten Fourier-Transformation (DFT) oder einer schnellen Fourier-Transformation (FFT) bestimmt werden.

Die Bestimmung der Sätze von Signalmerkmalen, die Berechnung des Satzes von Motorparametern und die Berechnung der Statorwicklungstemperatur $\vartheta$Stator kann nach jeder Periode T des Anregungssignals *f(t)* wiederholt werden, so dass die aktuelle Statorwicklungstemperatur $\vartheta$Stator immer wieder neu berechnet wird. Bei einer Anregungsfrequenz $f_A$ von $f_A$ = 0,5Hz, liegt somit alle 2 Sekunden ein neuer Wert für die Statorwicklungstemperatur $\vartheta$Stator vor.

Das Gleichungssystem kann aus vier nach den Motorparametern umgestellten Parametergleichungen bestehen, in denen die Motorparameter einerseits und die Signalmerkmale $\{x_0, x_{1,sin}, x_{1,cos}\}$ andererseits miteinander verknüpft sind. Vorzugsweise sind die Motorparameter der Statorwiderstand $R_S$, die Induktivität $L_d$ des Stators in Richtung der ersten Koordinatenachse (d-Achse), die Induktivität $L_q$ Stators in Richtung der zweiten Koordinatenachse (q-Achse) und die magnetische Flussverkettung $\Psi_{pm}$.

Konkret kann der Satz von Motorparametern beispielsweise aus den folgenden, das Gleichungssystem bildenden Parametergleichungen GL1, GL2, GL3, GL4 berechnet werden:

$$R_S = \frac{1}{i_{d,1,sin}}\left(u_{d,1,sin} + L_d 2\pi f_A i_{d,1,cos} + L_q i_{q,1,sin}\omega_{el,0} + L_q i_{q,0}\omega_{el,1,sin}\right) \qquad \text{GL1}$$

$$L_q = \frac{2 \cdot \left(-u_{d,0} + R_S i_{d,0}\right)}{2 i_{q,0}\omega_{el,0} + i_{q,1,cos}\omega_{el,1,cos} + i_{q,1,sin}\omega_{el,1,sin}} \qquad \text{GL2}$$

$$L_d = \frac{u_{q,1,sin} - R_S i_{q,1,sin} - \Psi_{PM}\omega_{el,1,sin} + L_q 2\pi f_A i_{q,1,cos}}{i_{d,1,sin}\omega_{el,0} + i_{d,0}\omega_{el,1,sin}} \qquad \text{GL3}$$

$$\Psi_{PM} = \frac{-1}{2\omega_{el,0}} \big( 2R_S i_{q,0} - 2u_{q,0} + 2L_d i_{d,0} \omega_{el,0} + L_d i_{d,1,cos} \omega_{el,1,cos}$$

$$+ L_d i_{d,1,sin} \omega_{el,1,sin} \big)$$

GL4

in denen

$R_s$      der elektrische Statorwiderstand,

$L_d$      die Induktivität des Stators in Richtung der ersten Koordinatenachse (d-Achse),

$L_q$      die Induktivität des Stators in Richtung der zweiten Koordinatenachse (q-Achse),

$\Psi_{pm}$      der verkettete magnetische Fluss,

$u_{d,0}$      der Gleichanteil der ersten, in Richtung der ersten Koordinatenachse (d-Achse) gerichteten Spannungskomponente,

$u_{d,1,sin}$      der Anteil des Betrags der Grundschwingungsamplitude der ersten, in Richtung der ersten Koordinatenachse (d-Achse) gerichteten Spannungskomponente bei der Anregungsfrequenz $f_A$ in Phase mit dem Anregungssignal $f(t)$,

$u_{d,1,cos}$      der Anteil des Betrags der Grundschwingungsamplitude der ersten, in Richtung der ersten Koordinatenachse (d-Achse) gerichteten Spannungskomponente bei der Anregungsfrequenz $f_A$ 90° phasenversetzt zum Anregungssignal $f(t)$,

$u_{q,0}$,      der Gleichanteil der zweiten, in Richtung der zweiten Koordinatenachse (q-Achse) gerichteten Spannungskomponente,

$u_{q,1,sin}$      der Anteil des Betrags der Grundschwingungsamplitude der zweiten, in Richtung der zweiten Koordinatenachse (q-Achse) gerichteten Spannungskomponente bei der Anregungsfrequenz $f_A$ in Phase mit dem Anregungssignal $f(t)$,

$u_{q,1,cos}$      der Anteil des Betrags der Grundschwingungsamplitude der zweiten, in Richtung der zweiten Koordinatenachse (q-Achse) gerichteten Spannungskomponente bei der Anregungsfrequenz $f_A$ 90° phasenversetzt zum Anregungssignal $f(t)$,

$i_{d,0}$      der Gleichanteil der ersten, in Richtung der ersten Koordinatenachse (d-Achse) gerichteten Stromkomponente,

$i_{d,1,sin}$      der Anteil des Betrags der Grundschwingungsamplitude der ersten, in Richtung der ersten Koordinatenachse (d-Achse) gerichteten Stromkomponente bei der Anregungsfrequenz $f_A$ in Phase mit dem Anregungssignal $f(t)$,

$i_{d,1,cos}$      der Anteil des Betrags der Grundschwingungsamplitude der ersten, in Richtung der ersten Koordinatenachse (d-Achse) gerichteten Stromkomponente bei der Anregungsfrequenz $f_A$ 90° phasenversetzt zum Anregungssignal $f(t)$,

$i_{q,0}$,      der Gleichanteil der zweiten, in Richtung der zweiten Koordinatenachse (q-Achse) gerichteten Stromkomponente,

$i_{q,1,sin}$      der Anteil des Betrags der Grundschwingungsamplitude der zweiten, in Richtung der zweiten Koordinatenachse (q-Achse) gerichteten Stromkomponente bei der Anregungsfrequenz $f_A$ in Phase mit dem Anregungssignal $f(t)$,

$i_{q,1,cos}$      der Anteil des Betrags der Grundschwingungsamplitude der zweiten, in Richtung der zweiten Koordinatenachse (q-Achse) gerichteten Stromkomponente bei der Anregungsfrequenz $f_A$ 90° phasenversetzt zum Anregungssignal $f(t)$,

$\omega_{el,0}$,      der Gleichanteil der Kreisfrequenz,

$\omega_{el,1,sin}$      der Anteil des Betrags der Grundschwingungsamplitude der Kreisfrequenz bei der Anregungsfrequenz $f_A$ in Phase mit dem Anregungssignal $f(t)$,

$\omega_{el,1,cos}$      der Anteil des Betrags der Grundschwingungsamplitude der Kreisfrequenz bei der Anregungsfrequenz $f_A$ 90° phasenversetzt zum Anregungssignal $f(t)$ und

$f_A$      die Anregungsfrequenz ist.

Bei dem Gleichungssystem wird deutlich, dass zur Berechnung eines der Motorparameter $R_S$, $L_d$, $L_q$, $\Psi_{pm}$ der Wert eines oder mehrerer der anderen Motorparameter benötigt wird oder werden. Für eine erstmalige Berechnung des Satzes von Motorparametern $R_S$, $L_d$, $L_q$, $\Psi_{pm}$ kann vorgesehen sein, dass Startwerte für alle Motorparametern $R_S$, $L_d$, $L_q$, $\Psi_{pm}$ verwendet werden. Diese können vorgegebene Startwerte sein. Beispielsweise können diese Startwerte jenen Werten entsprechen, die werksseitig für einen Elektromotor desselben Typs auf einer Testbank ermittelt worden sind. Die Startwerte können insbesondere aus den technischen Daten im Datenblatt des Elektromotors oder von dessen Typenschild entnommen sein. Es kann sich alternativ um empirische Werte, Erfahrungswerte oder durchschnittliche Werte handeln. Denn es sei angemerkt, dass die Startwerte nicht den tatsächlichen Werten der Motorparameter $R_S$, $L_d$, $L_q$, $\Psi_{pm}$ entsprechen müssen, da diese durch das Gleichungssystem und für die konkreten aktuellen Betriebsbedingungen des Synchronmotors erst berechnet werden.

Alternativ kann für eine erstmalige Berechnung des Satzes von Motorparametern Rs, $L_d$, $L_q$, $\Psi_{pm}$ vorgesehen sein, dass als erste Parametergleichung GL1 eine hierzu vereinfache Gleichung GL1* verwendet wird:

$$R_S = \frac{u_{d,1,sin}}{i_{d,1,sin}} \qquad\qquad \text{GL1*}$$

Denn die erfindungsgemäße Art der Anregung und Wahl der Anregungsfrequenz $f_A$ zielt gerade darauf ab, die Werte der induktiven Anteile in GL 1 zu minimieren. Dies wird erreicht, wenn die Stellgröße der d-Strom ist, so dass keine Drehzahlanregung erfolgt, und zudem die Anregungsfrequenz $f_A$ klein gewählt wird. In diesem Fall sind alle induktiven Anteile in GL1 gegenüber dem ohmschen Anteil null oder zumindest initial vernachlässigbar klein.

Nach der Berechnung von GL1* liegt der Statorwiderstand Rs vor und kann zur Berechnung von $L_q$ mit GL2 verwendet werden. Für die Berechnung der übrigen Motorparameter werden allerdings Startwerte für $L_d$ und $\Psi_{pm}$ benötigt. Diese können insbesondere aus den technischen Daten im Datenblatt des Elektromotors oder von dessen Typenschild entnommen sein. Es kann sich alternativ um empirische Werte, Erfahrungswerte oder durchschnittliche Werte handeln.

Sinnvollerweise wird der Satz von Motorparametern für einen konstanten Satz $T_x$ von Signalmerkmalen {$x_0$, $x_{1,sin}$, $x_{1,cos}$} eine Anzahl n von Iterationen wiederholt nacheinander berechnet, beispielsweise bis zu zehn Mal. Dies bewirkt, dass die Motorparameter mit ihren tatsächlichen Werten konvergieren. Beispielsweise kann die Anzahl n von Iterationen fest vorgegeben sein. Alternativ kann das Wiederholen beendet werden, wenn die Änderungen der Motorparameter gegenüber den vorherigen Werten jeweils einen Grenzwert unterschreiten.

Für eine neue Berechnung des Satzes von Motorparametern nach einer weiteren Periode T des Anregungssignals *f(t)* können dann die bei der vorherigen Periode T des Anregungssignals *f(t)* berechneten Werte des Satzes von Motorparametern als Startwerte verwendet werden.

Das Temperaturmodell $\vartheta$Stator($R_s$) kann im einfachsten Fall eine Gleichung sein, die einen linearen Zusammen-hang zwischen der Statorwicklungstemperatur $\vartheta$Stator und dem Statorwiderstand $R_s$ beschreibt. Beispielsweise kann das Temperaturmodell $\vartheta$Stator($R_s$) durch die folgende Gleichung gebildet sein:

$$\vartheta_{Stator}(R_S) = \frac{R_S - R_{S,0}}{R_{S,0} \cdot \alpha} + \vartheta_0$$

in der

$\vartheta_{Stator}$ die gesuchte Statorwicklungstemperatur,
$\vartheta_0$ eine Referenztemperatur,
$Rs$ der elektrische Statorwiderstand,
$R_{S,0}$ ein Referenzwiderstand und
$\alpha$ ein Temperaturkoeffizient ist.

Es ist aber auch möglich, als Temperaturmodell $\vartheta$Stator($R_s$) eine komplexere Gleichung zu verwenden, z.B. ein Polynom zweiter oder dritter Ordnung.

Vorteilhafterweise ist die mit dem Anregungssignal f(t) beaufschlagte Stellgröße eine Größe der vektoriellen Regelung, da diese auf einfache Weise manipuliert werden kann und bereits in der Regelung bekannt ist, d.h. nicht separat erfasst werden muss.

Vorzugsweise ist die Stellgröße jene Stromkomponente, die maßgeblich den magnetischen Fluss im Stator erzeugt. Wird die d-Achse so gewählt, dass sie auf der Magnetisierungsachse des permanentmagnetischen Rotors des Synchronmotors liegt, ist die den magnetischen Fluss erzeugende Stromkomponente jene, die in Richtung der d-Achse zeigt, anders ausgedrückt der sogenannte id-Strom. Dieser wir hier als erste Stromkomponente verstanden. Demgegenüber ist die zweite Stromkomponente, anders ausgedrückt der sogenannte iq-Strom, die in Richtung der q-Achse zeigende Stromkomponente, die rechtwinklig zur Magnetisierungsachse liegt. Die zweite Stromkomponente ist maßgeblich für die Entstehung des Drehmoments. Durch die Wahl der ersten Stromkomponente als Stellgröße kann somit das Drehmoment konstant gehalten werden. Nach außen, d.h. in den mechanischen Größen des Elektromotors ist die Überlagerung der Stellgröße mit dem Anregungssignal f(t) somit nicht ohne Weiteres erkennbar, so dass das erfindungsgemäße Verfahren die Anwendung, in der der Elektromotor eingesetzt wird, nicht beeinträchtigt.

Es sei angemerkt, dass die Temperaturberechnung bei dem vorgestellten Verfahren auf einem idealisierten Ansatz beruht, bei dem technische Einflüsse wie beispielsweise diskrete Reglertaktraten, eine nicht optimale Bestimmung des Rotorlagewinkels oder aber auch Schaltverluste des Wechselrichters nicht berücksichtigt sind. Diese und viele weitere Einflüsse verursachen, dass die Parameterschätzung zwar gegebenenfalls nominal korrekte Werte ("Typenschild-Daten") bestimmt, jedoch die Schätzgüte unter Umständen nicht hinreichend gut ist, um auch Temperaturänderungen zu bestimmen. Eine Anpassung der Temperaturbestimmung an reale Anwendungsbedingungen kann durch die Verwendung der zweiten Ausführungsvariante erfolgen, bei der das Verfahren um einen allgemeinen Funktionsapproximator ergänzt ist. Der Funktionsapproximators verwendet hierzu mindestens den Satz von Motorparametern und die Sätze $T_x$ der Signalmerkmale $\{x_0, x_{1,sin}, x_{1,cos}\}$.

Der Funktionsapproximator verwendet eine Ersatzfunktion, die die multiple Abhängigkeit der Statorwicklungstemperatur $\vartheta_{Stator}$ von den Motorparametern und den elektrischen Motorgrößen approximiert. Beispielsweise kann der Funktionsapproximator ein neuronales Netzwerk sein. Der Hauptvorteil des neuronalen Netzes ist die Flexibilität der Anwendung und die hohe Anpassbarkeit des Konzepts an beliebige Probleme.

Vorzugsweise kann der Funktionsapproximator ein rekurrentes neuronales Netzwerk sein. Dieses hat den Vorteil, dass es zeitliche Abhängigkeiten dynamischer Prozesse abbilden kann. Bei einem rekurrenten neuronalen Netzwerk ist die vom neuronalen Netzwerk berechnete Statorwicklungstemperatur $\vartheta_{Stator}$ auf seinen Eingang rückgekoppelt, so dass eine nächste Statorwicklungstemperatur $\vartheta_{Stator}(n)$ auch unter Verwendung der vorherigen Statorwicklungstemperatur $\vartheta_{Stator}(n-1)$ berechnet wird. Das neuronalen Netzwerk hat somit ein Gedächtnis.

Besonders gute Ergebnisse ergeben sich, wenn für die Schätzung der Statorwicklungstemperatur $\vartheta_{Stator}$ mit dem Funktionsapproximator auch die elektrische Leistungsaufnahme $P_{el}$ des Synchronmotors verwendet wird, da die Verlustleistung proportional zum Strom und Statorwiderstand ist ($P_{el} = R_S \cdot i_S^2$). Die hier verwendete Leistung ist die vom Motor aufgenommene elektrische Gesamtleistung. Beispielsweise kann über wenigstens eine Periode T des Anregungssignals $f(t)$ hinweg aus der elektrischen Leistungsaufnahme $P_{el}$ ein weiterer Satz $T_{Pel}$ von Signalmerkmalen $\{P_{el,0}, P_{el,1,sin}, P_{el,1,cos}\}$ bestimmt werden, bestehend aus dem Gleichanteil $P_{el,0}$ der elektrischen Leistungsaufnahme $P_{el}$, dem Betrag der Grundschwingungsamplitude $P_{el,1,sin}$ der elektrischen Leistungsaufnahme $P_{el}$ bei der Anregungsfrequenz $f_A$ und in Phase mit dem Anregungssignal $f(t)$ sowie dem Betrag der Grundschwingungsamplitude $P_{el,1,cos}$ der elektrischen Leistungsaufnahme $P_{el}$ bei der Anregungsfrequenz $f_A$ und 90° phasenversetzt zum Anregungssignal $f(t)$, wobei das neuronale Netzwerk zusätzlich diesen weiteren Satz $T_{Pel}$ von Signalmerkmalen $\{P_{el,0}, P_{el,1,sin}, P_{el,1,cos}\}$ verwendet.

Des Weiteren kann vorgesehen sein, dass das neuronale Netzwerk zusätzlich Messwerte von einem oder mehreren Temperatursensoren verwendet, der/ die in der Steuerungselektronik des Elektromotors verbaut ist/ sind oder der die Temperatur eines Fördermediums einer vom Elektromotor als Nassläufermotor angetriebenen Kreiselpumpe misst.

Ferner kann vorgesehen sein, zusätzlich oder alternativ zu den vorgenannten Weiterbildungen, dass das neuronale Netzwerk zusätzlich Messwerte von einem oder mehreren zum Elektromotor externen Sensoren, insbesondere Tempertursensoren verwendet, der/ die mit der Steuerungselektronik des Elektromotors verbunden ist/ sind.

Weitere Merkmale, Vorteile und Eigenschaften der Erfindung werden nachfolgend anhand von Ausführungsbeispielen und der beigefügten Figuren erläutert. In den Figuren bezeichnen Bezugszeichen stets dieselben oder äquivalente Komponenten, Schritte, Bereiche, Richtungs- oder Ortsangaben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:

Figur 1:  ein Zeigerdiagramm für die Spannungen bei einer permanentmagnetischen Synchronmaschine

Figur 2:  ein Ablaufdiagramm des erfindungsgemäßen Verfahrens gemäß einer ersten Variante

Figur 3:  ein Signalflussdiagramm gemäß der ersten Variante

Figur 4:  ein Ablaufdiagramm des erfindungsgemäßen Verfahrens gemäß einer zweiten Variante

Figur 5:  ein Signalflussdiagramm gemäß der zweiten Variante

Figur 6:  vier Diagramme D1, D2, D3, D4, zeigend die erste und zweite Stromkomponente in Diagramm D1, die erste und zweite Spannungskomponente in Diagramm D2, eine FFT der Stromkomponenten in Diagramm D3 und eine FFT der Spannungskomponenten in Diagramm D3.

Das nachfolgend beschriebene Verfahren ermöglicht es, auf Basis der in der Steuerungselektronik eines permanentmagnetischen Synchronmotors 1 vorliegenden Motorsignale, genauer gesagt auf Basis der in deren Motorregler 2 vorliegenden Motorsignale $x(t)$, nämlich der Motorströme $i_d$, $i_q$ und Spannungen $u_d$, $u_q$, innerhalb eines kurzen Zeitraums die Statorwicklungstemperatur $\vartheta_{Stator}$ rechnerisch zu bestimmen oder zumindest zu schätzen. Das Verfahren bestimmt die Statorwicklungstemperatur $\vartheta_{Stator}$ aus der temperaturbedingten Änderung des Statorwiderstandes Rs. Daher bedarf es einer möglichst optimalen Schätzung des Statorwiderstands Rs.

Wie Figur 1 verdeutlicht, ist der rein ohmsche Spannungsabfall $R_S \cdot i_S$ sehr klein im Vergleich zu den dominanten, induktiven Komponenten. Es bedarf deshalb einer geeigneten Anregung und Signalanalyse zur Isolation der temperaturabhängigen Änderung des Statorwiderstands Rs.

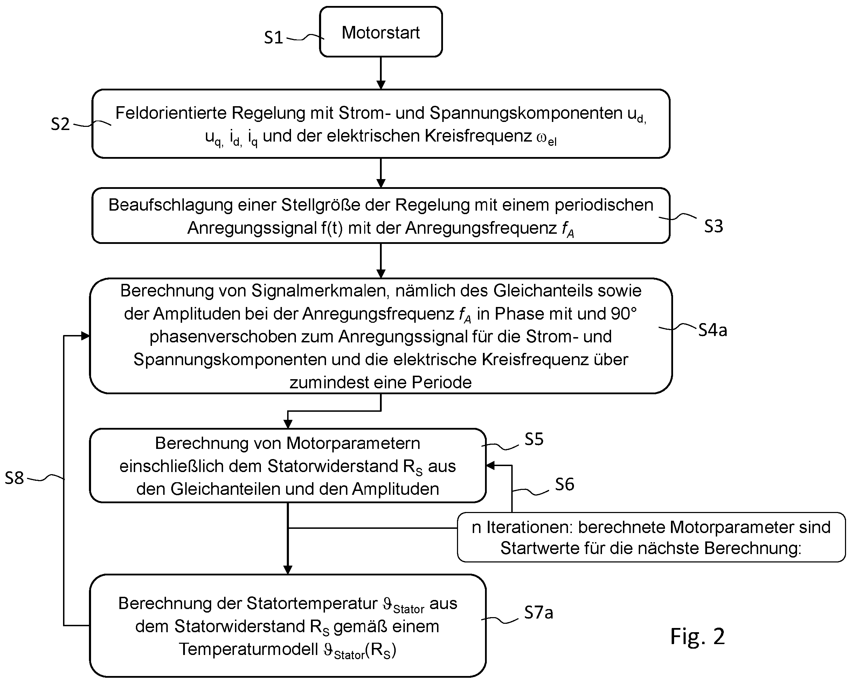

Figur 2 zeigt den Verfahrensablauf einer ersten Ausführungsvariante. Nach dem Motorstart, Schritt S1, regelt der Motorregler 2 den Synchronmotor 1 in Schritt S2 vektoriell in einem rotorfesten, mit einer Kreisfrequenz $\omega_{el}$ rotierenden Koordinatensystem mit den orthogonalen Koordinatenachsen d und q unter Verwendung einer ersten Stromkomponente $i_d$, die in Richtung der d-Achse zeigt, einer zweiten Stromkomponente $i_q$, die in Richtung der q-Achse zeigt, einer ersten Spannungskomponente $u_d$, die in Richtung der d-Achse zeigt, einer zweiten Spannungskomponente $u_q$, die in Richtung der q-Achse zeigt. Eine solche Regelung ist bei permanentmagnetischen Synchronmotoren hinlänglich bekannt, beispielsweise als sogenannte feldorientierte Regelung, so dass auf die einschlägige Fachliteratur verwiesen wird.

Während dieser Regelung wird nun erfindungsgemäß einer Stellgröße der Regelung ein niederfrequentes periodisches Anregungssignal $f(t)$ mit einer Anregungsfrequenz $f_A$ überlagert, Schritt S3. Das Anregungssignal $f(t)$ ist ein sinusförmiges Signal mit der analytischen Darstellung f(t) = a·sin($2\pi f_A \cdot t$) mit der Anregungsfrequenz $f_A$ und der Amplitude a. Die Frequenz $f_A$ ist so niedrig zu wählen, dass der induktive Widerstand $X_{L,d}$=j·$2\pi \cdot f_A \cdot L_d$ der Statorwicklung gegenüber dem Statorwiderstand zu vernachlässigen ist. Beispielsweise eigenen sich Frequenzen $f_A$ < 10 Hz je nach Auslegung des jeweiligen Motors. Die Frequenz $f_A$ beträgt hier beispielhaft 0,5Hz. Die Anregungsamplitude a des Anregungssignals $f(t)$ ist derart zu wählen, dass sich ein geeignetes Signal-Rausch-Verhältnis auf allen relevanten Größen (sowohl Ströme wie auch Spannungen) ergibt. Die Amplitude a beträgt hier beispielhaft 0,2A. Ferner ist die Stellgröße hier die erste Stromkomponente $i_d$. Mit anderen Worten wird ein sinusförmiges Anregungssignal in den id-Strom eingeprägt.

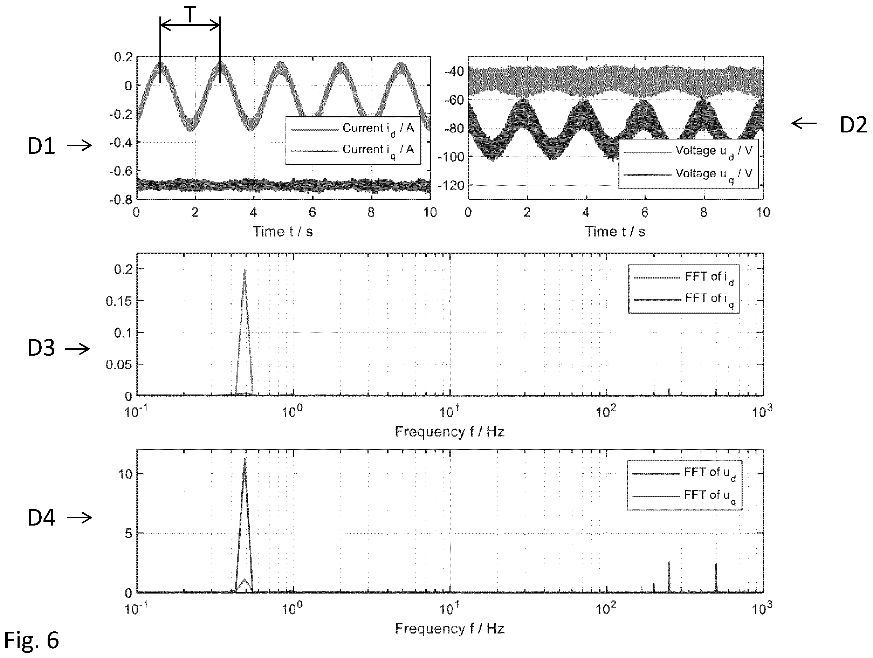

Das in Figur 6 dargestellte Diagramm D1 zeigt den zeitlichen Verlauf der ersten und zweiten Stromkomponente $i_d$ (oben) und $i_q$ (unten). Deutlich erkennbar ist, dass die erste Stromkomponente $i_d$ mit einer Periode T von 2s und einer Amplitude von ca. 0,2A schwankt. Eine periodische Schwankung mit der Frequenz 0,5Hz zeigt sich auch in der zweiten Spannungskomponente $u_q$, die in dem Diagramm D2 gezeigt ist.

In Schritt S4a erfolgt die Berechnung von Sätzen $T_x$ von Signalmerkmalen {$x_0$, $x_{1,sin}$, $x_{1,cos}$} der Motorsignale x(t) über zumindest eine Periode T, nämlich des Gleichanteils $x_0$ sowie der Grundschwingungsamplituden $x_{1,sin}$, $x_{1,cos}$ in den Motorsignalen x(t) bei der Anregungsfrequenz $f_A$ in Phase mit und 90° phasenverschoben zum Anregungssignal $f(t)$, wobei die Motorsignale x(t) die Strom- und Spannungskomponenten $i_d$, $i_q$, $u_d$, $u_q$ und die elektrische Kreisfrequenz $\omega_{el}$ sind. Konkret ergeben sich dann die folgenden Sätze $T_x$ mit x {$i_d$, iq, $u_d$, $u_q$, $\omega_{el}$} von Signalmerkmalen {$x_0$, $x_{1,sin}$, $x_{1,cos}$}:

$$T_{ud} = \{U_{d,0}, \ U_{d,1,sin}, \ U_{d,1,cos}\},$$

$$T_{uq} = \{U_{q,0}, \ U_{q,1,sin}, \ U_{q,1,cos}\},$$

$$T_{id} = \{I_{d,0}, \ i_{d,1,sin}, \ i_{d,1,cos}\},$$

$$T_{iq} = \{I_{q,0}, \ i_{q,1,sin}, \ i_{q,1,cos}\}$$

und

$$T\omega_{el} = \{\omega_{el,0}, \ \omega_{el,1,sin}, \ \omega_{el,1,cos}\}.$$

Die Berechnung erfolgt mathematisch durch Integration unter Verwendung der Formeln:

$$x_0 = \frac{1}{T} \int_{t_0}^{t_0+T} x(t)\, dt$$

$$x_{1,sin} = \frac{2}{T} \int_{t_0}^{t_0+T} x(t) \cdot \sin(2\pi f_A t)\, dt$$

$$x_{1,cos} = \frac{2}{T} \int_{t_0}^{t_0+T} x(t) \cdot \cos(2\pi f_A t)\, dt$$

in denen

$x_0$ der Gleichanteil des jeweiligen Motorsignals x(t), $x_{1,sin}$ der Anteil des Betrags der Grundschwingungsamplitude des jeweiligen Motorsignals x(t) bei der Anregungsfrequenz $f_A$ in Phase mit dem Anregungssignal *f(t)*, $x_{1,cos}$ der Anteil des Betrags der Grundschwingungsamplitude des jeweiligen Motorsignals x(t) bei der Anregungsfrequenz $f_A$ 90° phasenversetzt zum Anregungssignal *f(t)*, *T* die Periode des Anregungssignals *f(t)*, $f_A$ die Frequenz des Anregungssignals *f(t) und* $t_0$ der Startzeitpunkt der Integration ist.

Vereinfacht gesprochen, erfolgt während der periodischen Anregung der Stellgröße eine Fourier-Transformation, beispielsweise eine FFT, der ersten und zweiten Stromkomponente $i_d$, $i_q$, der ersten und zweiten Spannungskomponente $u_d$, $u_q$ und der Kreisfrequenz $\omega_{el}$. Denn die Fourier-Transformation liefert die gesuchten Signalmerkmale {$x_0$, $x_{1,sin}$, $x_{1,cos}$} auf einmal. Die Signalmerkmale {$x_0$, $x_{1,sin}$, $x_{1,cos}$} sind spektrale Kenngrößen, die die Motorsignale x(t) = {$i_d$(t), $i_q$(t), $u_d$(t), $u_q$(t), $\omega_{el}$(t)} beschreiben.

Figur 6 zeigt in dem Diagramm D3 eine FFT der Stromkomponenten $i_d$, $i_q$ und in Diagramm D4 eine FFT der Spannungskomponenten $u_d$, $u_q$. Deutlich erkennbar in Diagramm D3 ist bei der ersten Stromkomponente $i_d$ der Peak bei 0,5 Hz mit einem Betrag von 0,2. Die zweite Stromkomponente iq besitzt zwar auch einen Frequenzanteil bei 0,5 Hz, jedoch ist dieser unmerklich klein. Demgegenüber zeigt das Diagramm D4 einen ausgeprägten Peak in der zweiten Spannungskomponente $u_q$ bei 0,5 Hz

Durch geeignete mathematische Parametergleichungen GL1 bis GL4, nämlich Gleichungen auf Basis der Fourier-transformierten dq Motor- Differentialgleichungen, werden dann in Schritt S5 die Motorparameter Statorwiderstand $R_S$, Induktivität $L_d$ der d-Achse, Induktivität $L_q$ der q-Achse und der verkettete permanentmagnetische Fluss $\Psi_{pm}$ berechnet, genauer gesagt geschätzt. Die Gleichungen GL1 bis GL4 werden nachfolgend hergeleitet.

Die elektrischen Motor- Differentialgleichungen des permanentmagnetischen Synchronmotors lauten:

$$u_d(t) = R_S i_d(t) - L_q \omega_{el}(t) i_q(t) + L_d \frac{di_d(t)}{dt}$$

$$u_q(t) = R_S i_q(t) + L_d \omega_{el}(t) i_d(t) + \Psi_{PM} \omega_{el}(t) + L_q \frac{di_q(t)}{dt}$$

Eine analytische Fourier-Transformation dieser Differentialgleichungen ergibt einen Satz an statischen Gleichungen, die in Abhängigkeit der Motorparameter $R_S$, $L_d$, $L_q$ und $\Psi_{pm}$ einerseits und der Signalmerkmale der Stromkomponenten id, iq und der Kreisfrequenz $\omega$el andererseits die Signalmerkmale der Spannungskomponenten $u_d$, $u_q$ vorhersagen lassen:

$$u_{d,0} = R_S i_{d,0} - L_q i_{q,0}\, \omega_{el,0} - \frac{1}{2} L_q i_{q,1,cos}\, \omega_{el,1,cos} - \frac{1}{2} L_q i_{q,1,sin}\, \omega_{el,1,sin}$$

$$u_{q,0} = R_S i_{q,0} + \Psi_{PM} \omega_{el,0} + L_d i_{d,0}\, \omega_{el,0} + \frac{1}{2} L_d i_{d,1,cos}\, \omega_{el,1,cos} + \frac{1}{2} L_d i_{d,1,sin}\, \omega_{el,1,sin}$$

$$u_{d,1,sin} = R_S i_{d,1,sin} - L_q\, 2\pi f_A i_{d,1,cos} - L_q i_{q,1,sin}\, \omega_{el,0} - L_q i_{q,0}\, \omega_{el,1,sin}$$

$$u_{q,1,sin} = R_S i_{q,1,sin} + \Psi_{PM} \omega_{el,1,sin} - L_q 2\pi f_A i_{q,1,cos} + L_d i_{d,1,sin}\, \omega_{el,0} + L_d i_{d,0}\, \omega_{el,1,sin}$$

$$u_{d,1,cos} = R_S i_{d,1,cos} - L_q\, 2\pi f_A i_{d,1,sin} - L_q i_{q,1,cos}\, \omega_{el,0} - L_q i_{q,0}\, \omega_{el,1,cos}$$

$$u_{q,1,cos} = R_S i_{q,1,cos} + \Psi_{PM} \omega_{el,1,cos} + L_q 2\pi f_A i_{q,1,sin} + L_d i_{d,1,cos}\, \omega_{el,0} + L_d i_{d,0}\, \omega_{el,1,cos}$$

Durch geschickte Umformung der statischen Gleichungen erhält man ein Gleichungssystem aus vier Parametergleichungen GL1, GL2, GL3, GL4, das in Abhängigkeit der berechneten Signalmerkmale {$x_0$, $x_{1,sin}$, $x_{1,cos}$} der Strom- und Spannungskomponenten $i_d$, $i_q$, $u_d$, $u_q$ sowie der Kreisfrequenz $\omega_{el}$, und in Abhängigkeit der zuvor bestimmten Motorparameter $R_S$, $L_d$, $L_q$ und $\Psi_{pm}$, aktualisierte neue Motorparameter $R_S$, $L_d$, $L_q$ und $\Psi_{pm}$ schätzt:

$$R_S = \frac{1}{i_{d,1,sin}}\left(u_{d,1,sin} + L_d 2\pi f_A i_{d,1,cos} + L_q i_{q,1,sin}\omega_{el,0} + L_q i_{q,0}\omega_{el,1,sin}\right) \qquad \text{GL1}$$

$$L_q = \frac{2 \cdot \left(u_{d,0} - R_S i_{d,0}\right)}{2 i_{q,0}\omega_{el,0} + i_{q,1,cos}\omega_{el,1,cos} + i_{q,1,sin}\omega_{el,1,sin}} \qquad \text{GL2}$$

$$L_d = \frac{u_{q,1,sin} - R_S i_{q,1,sin} - \Psi_{PM}\omega_{el,1,sin} + L_q 2\pi f_A i_{q,1,cos}}{i_{d,1,sin}\omega_{el,0} + i_{d,0}\omega_{el,1,sin}} \qquad \text{GL3}$$

$$\Psi_{PM} = \frac{-1}{2\omega_{el,0}}\left(2R_S i_{q,0} - 2u_{q,0} + 2L_d i_{d,0}\omega_{el,0} + L_d i_{d,1,cos}\omega_{el,1,cos} \right.$$
$$\left. + L_d i_{d,1,sin}\omega_{el,1,sin}\right) \qquad \text{GL4}$$

in denen

| | |
|---|---|
| Rs | der elektrische Statorwiderstand, |
| $L_d$ | die Induktivität des Stators in Richtung der d-Achse, |
| $L_q$ | die Induktivität des Stators in Richtung der q-Achse, |
| $\Psi_{pm}$ | der verkettete magnetische Fluss, |
| $u_{d,0}$ | der Gleichanteil der ersten, in Richtung der d-Achse gerichteten Spannungskomponente, |
| $u_{d,1,sin}$ | der Anteil des Betrags der Grundschwingungsamplitude der ersten, in Richtung der d-Achse gerichteten Spannungskomponente bei der Anregungsfrequenz $f_A$ in Phase mit dem Anregungssignal f(t), |
| $u_{d,1,cos}$ | der Anteil des Betrags der Grundschwingungsamplitude der ersten, in Richtung der d-Achse gerichteten Spannungskomponente bei der Anregungsfrequenz $f_A$ 90° phasenversetzt zum Anregungssignal *f(t)*, |
| $u_{q,0}$, | der Gleichanteil der zweiten, in Richtung der q-Achse gerichteten Spannungskomponente, |
| $u_{q,1,sin}$ | der Anteil des Betrags der Grundschwingungsamplitude der zweiten, in Richtung der q-Achse gerichteten Spannungskomponente bei der Anregungsfrequenz $f_A$ in Phase mit dem Anregungssignal *f(t)*, |
| $u_{q,1,cos}$ | der Anteil des Betrags der Grundschwingungsamplitude der zweiten, in Richtung der q-Achse gerichteten Spannungskomponente bei der Anregungsfrequenz $f_A$ 90° phasenversetzt zum Anregungssignal *f(t)*, |
| $i_{d,0}$ | der Gleichanteil der ersten, in Richtung der d-Achse gerichteten Stromkomponente, |
| $i_{d,1,sin}$ | der Anteil des Betrags der Grundschwingungsamplitude der ersten, in Richtung der d-Achse gerichteten Stromkomponente bei der Anregungsfrequenz $f_A$ in Phase mit dem Anregungssignal *f(t)*, |
| $i_{d,1,cos}$ | der Anteil des Betrags der Grundschwingungsamplitude der ersten, in Richtung der d-Achse gerichteten Stromkomponente bei der Anregungsfrequenz $f_A$ 90° phasenversetzt zum Anregungssignal *f(t)*, |
| $i_{q,0}$, | der Gleichanteil der zweiten, in Richtung der q-Achse gerichteten Stromkomponente, |
| $i_{q,1,sin}$ | der Anteil des Betrags der Grundschwingungsamplitude der zweiten, in Richtung der q-Achse gerichteten Stromkomponente bei der Anregungsfrequenz $f_A$ in Phase mit dem Anregungssignal *f(t)*, |
| $i_{q,1,cos}$ | der Anteil des Betrags der Grundschwingungsamplitude der zweiten, in Richtung der q-Achse gerichteten Stromkomponente bei der Anregungsfrequenz $f_A$ 90° phasenversetzt zum Anregungssignal *f(t)*, |
| $\omega_{el,0}$, | der Gleichanteil der Kreisfrequenz, |
| $\omega_{el,1,sin}$ | der Anteil des Betrags der Grundschwingungsamplitude der Kreisfrequenz bei der Anregungsfrequenz $f_A$ in Phase mit dem Anregungssignal *f(t)*, |
| $\omega_{el,1,cos}$ | der Anteil des Betrags der Grundschwingungsamplitude der Kreisfrequenz bei der Anregungsfrequenz $f_A$ 90° phasenversetzt zum Anregungssignal *f(t)* und |
| $f_A$ | die Anregungsfrequenz ist. |

Durch initiales Einsetzen bekannter Startwerte für die Motorparameter $R_S$, $L_d$, $L_q$ und $\Psi_{pm}$ und iteratives

Berechnen aktualisierter Motorparameter $R_S$, $L_d$, $L_q$ und $\Psi_{pm}$ wird nach einigen Iterationen, beispielsweise weniger als zehn Iterationen, eine Konvergenz der berechneten Motorparameter $R_S$, $L_d$, $L_q$ und $\Psi_{pm}$ für einen konstanten Satz $T_x$ an Signalmerkmalen $\{x_0, x_{1,sin}, x_{1,cos}\}$ erzielt. Diese Iterationen werden durch die Iterationsschleife S6 ausgeführt. Der konvergierte Satz an Motorparametern $R_S$, $L_d$, $L_q$ und $\Psi_{pm}$ kann als dann die Startwerte für eine neue Berechnungsschleife S8 nach einer weiteren Anregungsperiode T bilden.

Die Bestimmung der Wicklungstemperatur $\vartheta_{Stator}$ erfolgt durch die Auswertung der temperaturbedingten Änderung des Statorwiderstands Rs. Der modellbasierte Zusammenhang zwischen der Temperatur $\vartheta_{Stator}$ und dem Widerstand Rs lässt sich im relevanten Temperaturbereich als lineare Funktion realisieren. So kann der konvergierte Wert des Statorwiderstands Rs gemäß folgender Funktion in eine Temperatur umgerechnet werden, wenn für eine Refe-renztemperatur $\vartheta_0$ ein

Referenzwiderstandswert $R_{S,0}$ und ein Temperaturkoeffizient $\alpha$ bekannt sind:

$$\vartheta_{Stator}(R_S) = \frac{R_S - R_{S,0}}{R_{S,0} \cdot \alpha} + \vartheta_0 \qquad\qquad \text{GL5}$$

Dies erfolgt in Schritt S7a. Beispielsweise kann bei der Referenztemperatur $\vartheta_0 = 20°C$, der Referenzwiderstand $R_{S,0}$ den Wert 10,6Ω und der Temperaturkoeffizient $\alpha$ den Wert 0,045 aufweisen.

Die Statorwicklungstemperatur $\vartheta_{Stator}$ ist damit für eine erste Periode T des Anregungssignals f(t) bestimmt und das Verfahren wird anschließend für eine weitere Periode T wiederholt, indem es über die Schleife S8 bei Schritt S4a fortgesetzt wird.

Figur 3 veranschaulicht den Signalfluss bei dem erfindungsgemäßen Verfahren gemäß dem Ablauf in Figur 2. Zentrales Element ist hier der Motorregler 2, der die Motorregelung mitsamt der beschriebenen periodischen Anregung durchführt. Er berechnet und stellt die Motorphasenspannungen $u_a(t)$, $u_b(t)$, $u_c(t)$, anhand der ersten und zweiten Spannungskomponente $u_d$, $u_q$ so ein, dass in den Statorwicklungen ein bestimmter Motorstrom $i_a(t)$, $i_b(t)$, $i_c(t)$, darstellbar durch die erste und zweite Stromkomponente $i_d$, $i_q$, eingeprägt wird. Die drei Phasenströme $i_a(t)$, $i_b(t)$, $i_c(t)$ des Motors 1 werden im Motorregler 2 gemessen und in bekannter Weise mittels der Clarke-Transformation in ein zweiachsiges Koordinatensystem mit den Achsen $\alpha$, $\beta$ überführt und mittels der Park-Transformation in das rotorfeste, rotierende Koordinaten mit den Achsen d, q überführt, d.h. in die erste und zweite Stromkomponente $i_d$, $i_q$ umgerechnet. Dies erfolgt in umgekehrter Form mit der ersten und zweiten Spannungskomponente $u_d$, $u_q$, die, damit sie vom Frequenzumrichter eingestellt werden können, vom Motorregler 2 zunächst mittels der inversen Park-Transformation in statorfeste Größe umgerechnet und mittels der inversen Clarke-Transformation in die einzustellenden Phasenspannungen $u_a(t)$, $u_b(t)$, $u_c(t)$ umgerechnet werden.

Die erste und zweite Spannungskomponente $u_d$, $u_q$ und die erste und zweite Stromkomponente $i_d$, $i_q$ sowie die ebenfalls in der Motorregelung 2 bekannte elektrische Kreisfrequenz $\omega_{el}$, mit der die genannten Komponenten $u_d$, $u_q$, $i_d$, $i_q$ rotieren und die der elektrischen Drehfrequenz entspricht, werden einer Einheit 3 zur Berechnung der Signalmerkmale $\{x_0, x_{1,sin}, x_{1,cos}\}$ zugeführt. Diese Einheit berechnet für eine Anregungsperiode T die Gleichanteile $x_0$ der Motorsignale x(t) $= \{u_d, u_q, i_d, i_q, \omega_{el}\}$ sowie die Amplituden $x_{1,sin}$, $x_{1,cos}$ der darin infolge der Anregung enthaltenen Anregungsfrequenz $f_A$, so dass die Einheit 3 insgesamt die fünfzehn besagten Signalmerkmale ausgibt:

$u_{d,0}$, $u_{d,1,sin}$, $u_{d,1,cos}$, $u_{q,0}$, $u_{q,1,sin}$, $u_{q,1,cos}$, $i_{d,0}$, $i_{d,1,sin}$, $i_{d,1,cos}$, $i_{q,0}$, $i_{q,1,sin}$, $i_{q,1,cos}$, $\omega_{el,0}$, $\omega_{el,1,sin}$ und $\omega_{el,1,cos}$

Diese bilden Eingangssignale einer zweiten Berechnungseinheit 4, die dazu bestimmt ist, die Motorparameter $R_S$, $L_d$, $L_q$ und $\Psi_{pm}$ zu ermitteln. Dies erfolgt mittels der zuvor dargestellten Parametergleichungen GL1 bis GL4. Alle berechneten Motorparameter $R_S$, $L_d$, $L_q$ und $\Psi_{pm}$ können auf den Eingang zurückgeführt sein, und als Startwerte für die nächste Iteration oder zu Beginn der nächsten Periode T fungieren, was durch den gestrichelten Rückkopplungspfeil veranschaulicht ist.

Lediglich der Statorwiderstand Rs wird anschließend in der Umrechnungseinheit 5 verwendet, um daraus gemäß dem zuvor beschrieben modellhaften Zusammenhang (GL5) die Statorwicklungstemperatur $\vartheta_{Stator}$ zu bestim-men.

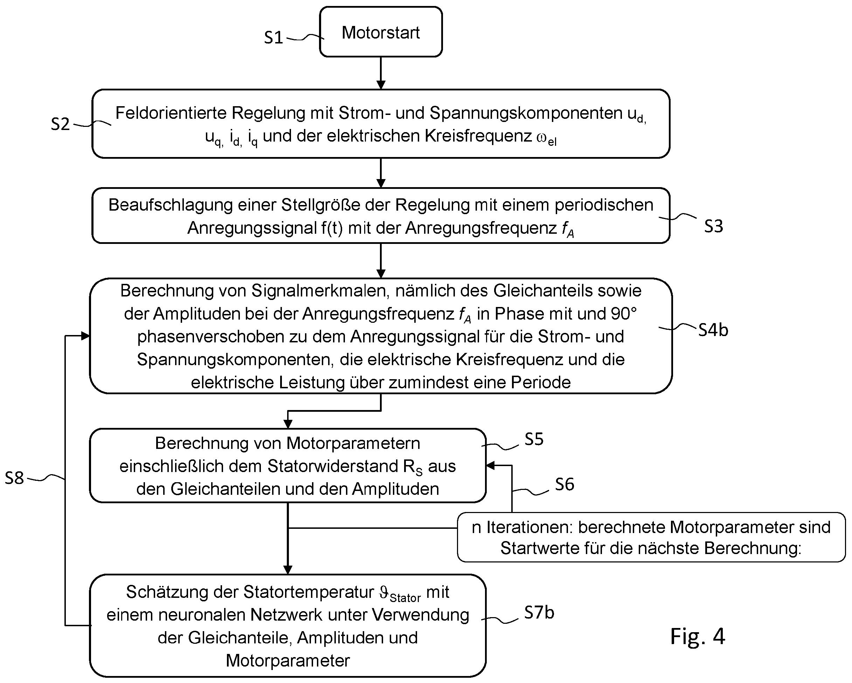

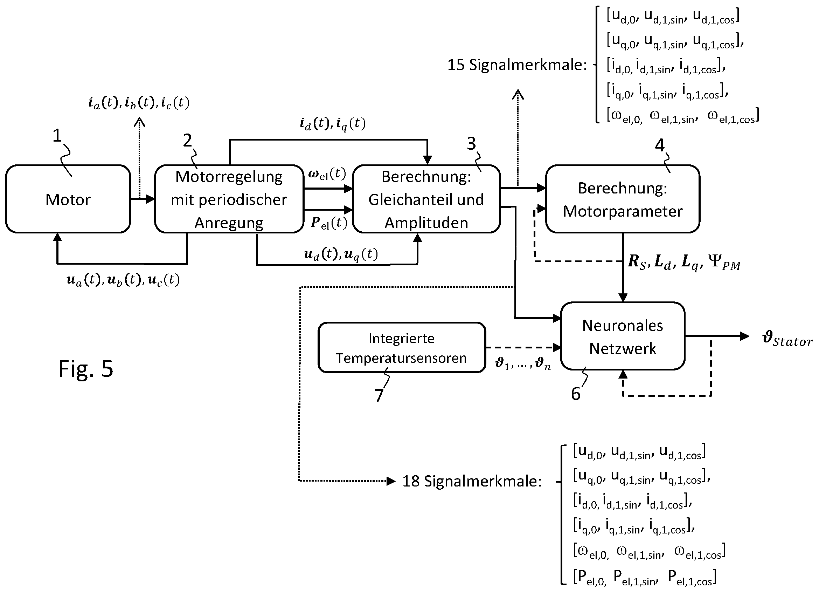

In einer zweiten Ausführungsvariante, die in den Figuren 4 und 5 veranschaulicht ist, erfolgt die Vorhersage der Wicklungstemperatur $\vartheta_{Stator}$ mit Hilfe eines neuronalen Netzes 6, das den Statorwiderstand Rs auf die Statorwicklungs-temperatur $\vartheta_{Stator}$ abbildet, siehe Schritt S7b in Figur 4. Beispielsweise kann hierzu ein rückgekoppeltes neuronales Netzwerk 4 verwendet werden. Der gestrichelte Rückkopplungspfeil in Figur 5 vom Ausgang des neuronalen Netzwerks 6 zu dessen Eingang gibt an, dass die Rückkopplung optional ist. Solche Netzwerkstrukturen sind in ihren unterschiedlichen Varianten als rekurrentes Neuronales Netz (RNN), nichtlineares Autoregressives Netzwerk (NARXNET), oder als Long-Short-Term-Memory (LSTM) Netz in der Literatur bekannt.

Die zweite Ausführungsvariante unterscheidet sich von der ersten Ausführungsvariante zudem darin, dass in Schritt S4b auch für die elektrische Leistung die genannten Signalmerkmale $\{x_0, x_{1,sin}, x_{1,cos}\}$ bestimmt werden. Denn es ist hilfreich für die Abbildung alle vorhandenen Schätzwerte der Motorparameter $R_S$, $L_d$, $L_q$ und $\Psi_{pm}$ zu nutzen und auch auf alle anderen Sätze von Signalmerkmalen $\{x_0, x_{1,sin}, x_{1,cos}\}$ der Motorsignale x(t) zurückzugreifen. Insgesamt erhält das neuronale Netzwerk in dieser Ausführungsvariante 18 Signalmerkmale und die Werte der Motorparameter $R_S$, $L_d$, $L_q$ und $\Psi_{pm}$.

Weiterhin verfügen Steuerelektroniken oftmals über einen oder mehrere interne Temperatursensoren 7, beispielsweise zur Überwachung der Temperatur auf Elektronikplatinen oder in Prozessoren. Diese Temperatur-Informationen $\vartheta_1, ...,\vartheta_n$ können ebenfalls unterstützend für die Optimierung der Vorhersagegüte des neuronalen Netzes 6 eingesetzt werden. Technische Einflüsse wie beispielsweise diskrete Reglertaktraten, eine nicht optimale Bestimmung des Rotorlagewinkels oder aber auch Schaltverluste des Wechselrichters, die bei dem ersten Verfahren gemäß Figuren 2 und 3 unberücksichtigt bleiben, können mit Hilfe des neuronalen Netzes 6 und seiner vielen Eingangsparameter berücksichtigt und die Statorwicklungstemperatur $\vartheta_{Stator}$ somit genauer bestimmt werden.

Für das Anlernen des neuronalen Netzwerks werden Trainingsdaten benötigt. Hierzu werden die Eingangsgrößen des neuronalen Netzwerks sowie die Statortemperatur für eine Vielzahl unterschiedlicher Arbeitspunkte, sowie die dynamischen Übergänge zwischen den Arbeitspunkten, im relevanten Arbeitsbereich gemessen. Durch ein Gradientenabstiegsverfahren können nun die internen Gewichte des neuronalen Netzes an die Trainingsdaten angepasst und der Fehler zwischen den gemessenen und vorhergesagten Statortemperaturen minimiert werden. Ein typischer Algorithmus zur Optimierung der Gewichte ist die sogenannte Backpropagation Methode. Das trainierte Netzwerk kann für alle Elektromotoren, insbesondere alle Kreiselpumpen einer Baureihe eingesetzt werden.

Da die Ausführung des erfindungsgemäßen Verfahrens auf dem Motorregler der Steuerungselektronik, bzw. im Falle eines Pumpenaggregats in der Pumpenelektronik, und vorzugsweise auf einem Prozessor des Motorreglers erfolgt, bedarf es keiner Schnittstelle zu einer Cloud, um etwaige Berechnungen außerhalb des der Steuerungselektronik auszuführen. Aus diesem Grund müssen die Berechnungsmethoden aber auch mit Rücksicht auf die Speichergröße und die Prozessorleistung gewählt werden, um keine zu hohen Rechenzeiten und damit gegebenenfalls eine Beeinträchtigung des Motor- oder Pumpenbetriebs zu provozieren.

Der Synchronmotor 1 kann ein Nassläufermotor einer Kreiselpumpe sein. Diese kann einen Temperatursensor zur Erfassung des Mediums verbaut haben. Auch dessen Temperatur-Information kann dem neuronalen Netz 6 zugeführt werden.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

**Patentansprüche**

1. Verfahren zur Bestimmung der Temperatur ($\vartheta_{Stator}$) der Statorwicklung eines Elektromotors, insbesondere eines permanentmagnetischen Synchronmotors (1), der von einer Motorregelung (2) vektoriell in einem mit einer Kreisfrequenz ($\omega_{el}$) rotierenden Koordinatensystem unter Verwendung einer ersten und zweiten Stromkomponente ($i_d$, $i_q$) und einer ersten und zweiten Spannungskomponente ($u_d$, $u_q$), die jeweils in Richtung einer der Koordinatenachsen (d, q) zeigen, geregelt wird, wobei während der Regelung einer Stellgröße ($i_d$) ein periodisches Anregungssignal ($f(t)$) mit einer Anregungsfrequenz ($f_A$) überlagert wird, und währenddessen

    - über wenigstens eine Periode (T) des Anregungssignals ($f(t)$) hinweg zumindest aus der ersten und zweiten Spannungskomponente ($u_d$, $u_q$), der ersten und zweiten Stromkomponente ($i_d$, $i_q$) und der Kreisfrequenz ($\omega_{el}$), die jeweils ein Motorsignal ($x(t)$) bilden, jeweils ein Satz ($T_x$) von Signalmerkmalen ($\{x_0, x_{1,sin}, x_{1,cos}\}$) bestimmt wird, umfassend

- den Gleichanteil ($x_0$),
- den Anteil des Betrags der Grundschwingungsamplitude ($x_{1,sin}$) bei der Anregungsfrequenz ($f_A$) in Phase mit dem Anregungssignal (*f(t)*) sowie
- den Anteil des Betrags der Grundschwingungsamplitude ($x_{1,cos}$) bei der Anregungsfrequenz ($f_A$) 90° phasenversetzt zum Anregungssignal (*f(t)*), in dem jeweiligen Motorsignal (x(t)),

- aus einem Gleichungssystem (GL1, GL2, GL3, GL4) unter Verwendung der Signalmerkmale ($\{x_0, x_{1,sin}, x_{1,cos}\}$) ein Satz von Motorparametern ($R_S$, $L_d$, $L_q$, $\Psi_{pm}$) berechnet wird, der den elektrischen Statorwiderstand (Rs) umfasst, und
- die Statorwicklungstemperatur ($\vartheta_{Stator}$) anschließend aus einem Temperaturmodell ($\vartheta_{Stator}(R_s)$), das die Statorwicklungstemperatur ($\vartheta_{Stator}$) mit dem Statorwiderstand ($R_s$) insbesondere linear verknüpft, berechnet oder unter Verwendung eines Funktionsapproximators (6) geschätzt wird, der hierzu mindestens den Satz von Motorparametern ($R_S$, $L_d$, $L_q$, $\Psi_{pm}$) und die Sätze ($T_x$) der Signalmerkmale ($\{x_0, x_{1,sin}, x_{1,cos}\}$) verwendet.

2. Verfahren nach Anspruch 1, **dadurch gekennzeichnet, dass** die Anregungsfrequenz ($f_A$) kleiner als 10Hz, insbesondere kleiner als 1Hz ist, beispielsweise 0,5Hz beträgt.

3. Verfahren nach Anspruch 1 oder 2, **dadurch gekennzeichnet, dass** die Amplitude (a) des Anregungssignals (f(t)) zwischen 1% und 20% des Nennwerts der Stellgröße ($i_d$) beträgt.

4. Verfahren nach einem der vorherigen Ansprüche, **dadurch gekennzeichnet, dass** die Sätze ($T_x$) von Signalmerkmalen ($\{x_0, x_{1,sin}, x_{1,cos}\}$) durch eine Integration der Motorsignale (x(t)) ermittelt werden, insbesondere mit Hilfe einer Fourier-Transformation, wie beispielsweise einer diskreten Fourier-Transformation (DFT) oder einer schnellen Fourier-Transformation (FFT).

5. Verfahren nach einem der vorherigen Ansprüche, **dadurch gekennzeichnet, dass** die Bestimmung der Sätze ($T_x$) von Signalmerkmalen ($\{x_0, x_{1,sin}, x_{1,cos}\}$), die Berechnung des Satzes von Motorparametern ($R_S$, $L_d$, $L_q$, $\Psi_{pm}$) und die Berechnung der Statorwicklungstemperatur ($\vartheta_{Stator}$) nach jeder Periode (T) des Anregungssignals (*f(t)*) wiederholt wird.

6. Verfahren nach einem der vorherigen Ansprüche, **dadurch gekennzeichnet, dass** das Gleichungssystem aus vier nach den Motorparametern ($R_S$, $L_d$, $L_q$, $\Psi_{pm}$) umgestellten Parametergleichungen besteht, in denen die Motorparameter ($R_S$, $L_d$, Lq, $\Psi_{pm}$) einerseits und die Signalmerkmale ($\{x_0, x_{1,sin}, x_{1,cos}\}$) andererseits miteinander verknüpft sind.

7. Verfahren nach einem der vorherigen Ansprüche, **dadurch gekennzeichnet, dass** die Motorparameter ($R_S$, $L_d$, $L_q$, $\Psi_{pm}$) der Statorwiderstand ($R_S$), die Induktivität ($L_d$) des Stators in Richtung der ersten Koordinatenachse (d-Achse), die Induktivität ($L_q$) des Stators in Richtung der zweiten Koordinatenachse (q-Achse) und die magnetische Flussverkettung ($\Psi_{pm}$) sind.

8. Verfahren nach einem der vorherigen Ansprüche, **dadurch gekennzeichnet, dass** der Satz von Motorparametern ($R_S$, $L_d$, $L_q$, $\Psi_{pm}$) aus den folgenden, das Gleichungssystem bildenden Parametergleichungen berechnet wird:

$$R_S = \frac{1}{i_{d,1,sin}}\left(u_{d,1,sin} + L_d 2\pi f_A i_{d,1,cos} + L_q i_{q,1,sin}\omega_{el,0} + L_q i_{q,0}\omega_{el,1,sin}\right) \qquad \text{GL1}$$

$$L_q = \frac{2 \cdot (-u_{d,0} + R_S i_{d,0})}{2 i_{q,0}\omega_{el,0} + i_{q,1,cos}\omega_{el,1,cos} + i_{q,1,sin}\omega_{el,1,sin}} \qquad \text{GL2}$$

$$L_d = \frac{u_{q,1,sin} - R_S i_{q,1,sin} - \Psi_{PM}\omega_{el,1,sin} + L_q 2\pi f_A i_{q,1,cos}}{i_{d,1,sin}\omega_{el,0} + i_{d,0}\omega_{el,1,sin}} \qquad \text{GL3}$$

$$\Psi_{PM} = \frac{-1}{2\omega_{el,0}}(2R_S i_{q,0} - 2u_{q,0} + 2L_d i_{d,0}\omega_{el,0} + L_d i_{d,1,cos}\omega_{el,1,cos}$$

$$+ L_d i_{d,1,sin}\omega_{el,1,sin})$$

GL4

in denen

Rs der elektrische Statorwiderstand,

$L_d$ die Induktivität des Stators in Richtung der ersten Koordinatenachse (d-Achse),

$L_q$ die Induktivität des Stators in Richtung der zweiten Koordinatenachse (q-Achse),

$\Psi_{pm}$ der verkettete magnetische Fluss,

$u_{d,0}$ der Gleichanteil der ersten, in Richtung der ersten Koordinatenachse (d-Achse) gerichteten Spannungskomponente,

$u_{d,1,sin}$ der Anteil des Betrags der Grundschwingungsamplitude der ersten, in Richtung der ersten Koordinatenachse (d-Achse) gerichteten Spannungskomponente bei der Anregungsfrequenz ($f_A$) in Phase mit dem Anregungssignal (*f(t)*),

$u_{d,1,cos}$ der Anteil des Betrags der Grundschwingungsamplitude der ersten, in Richtung der ersten Koordinatenachse (d-Achse) gerichteten Spannungskomponente bei der Anregungsfrequenz ($f_A$) 90° phasenversetzt zum Anregungssignal (*f(t)*),

$u_{q,0}$, der Gleichanteil der zweiten, in Richtung der zweiten Koordinatenachse (q-Achse) gerichteten Spannungskomponente,

$u_{q,1,sin}$ der Anteil des Betrags der Grundschwingungsamplitude der zweiten, in Richtung der zweiten Koordinatenachse (q-Achse) gerichteten Spannungskomponente bei der Anregungsfrequenz ($f_A$) in Phase mit dem Anregungssignal (*f(t)*),

$u_{q,1,cos}$ der Anteil des Betrags der Grundschwingungsamplitude der zweiten, in Richtung der zweiten Koordinatenachse (q-Achse) gerichteten Spannungskomponente bei der Anregungsfrequenz ($f_A$) 90° phasenversetzt zum Anregungssignal (*f(t)*),

$i_{d,0}$ der Gleichanteil der ersten, in Richtung der ersten Koordinatenachse (d-Achse) gerichteten Stromkomponente,

$i_{d,1,sin}$ der Anteil des Betrags der Grundschwingungsamplitude der ersten, in Richtung der ersten Koordinatenachse (d-Achse)gerichteten Stromkomponente bei der Anregungsfrequenz ($f_A$) in Phase mit dem Anregungssignal (*f(t)*),

$i_{d,1,cos}$ der Anteil des Betrags der Grundschwingungsamplitude der ersten, in Richtung der ersten Koordinatenachse (d-Achse)gerichteten Stromkomponente bei der Anregungsfrequenz ($f_A$) 90° phasenversetzt zum Anregungssignal (*f(t)*),

$i_{q,0}$, der Gleichanteil der zweiten, in Richtung der zweiten Koordinatenachse (q-Achse) gerichteten Stromkomponente,

$i_{q,1,sin}$ der Anteil des Betrags der Grundschwingungsamplitude der zweiten, in Richtung der zweiten Koordinatenachse (q-Achse) gerichteten Stromkomponente bei der Anregungsfrequenz ($f_A$) in Phase mit dem Anregungssignal (*f(t)*),

$i_{q,1,cos}$ der Anteil des Betrags der Grundschwingungsamplitude der zweiten, in Richtung der zweiten Koordinatenachse (q-Achse) gerichteten Stromkomponente bei der Anregungsfrequenz ($f_A$) 90° phasenversetzt zum Anregungssignal (*f(t)*),

$\omega_{el,0}$, der Gleichanteil der Kreisfrequenz,

$\omega_{el,1,sin}$ der Anteil des Betrags der Grundschwingungsamplitude der Kreisfrequenz bei der Anregungsfrequenz ($f_A$) in Phase mit dem Anregungssignal (*f(t)*),

$\omega_{el,1,cos}$ der Anteil des Betrags der Grundschwingungsamplitude der Kreisfrequenz bei der Anregungsfrequenz ($f_A$) 90° phasenversetzt zum Anregungssignal (*f(t)*) und

$f_A$ die Anregungsfrequenz ist.

**9.** Verfahren nach einem der vorherigen Ansprüche, **dadurch gekennzeichnet, dass** das Temperaturmodell ($\vartheta_{Stator}$($R_s$)) durch die folgende Gleichung gebildet ist:

$$\vartheta_{Stator}(R_S) = \frac{R_S - R_{S,0}}{R_{S,0} \cdot \alpha} + \vartheta_0$$

in der

$\vartheta_{Stator}$ die gesuchte Statorwicklungstemperatur,
$\vartheta_0$ eine Referenztemperatur,
$Rs$ der elektrische Statorwiderstand,
$R_{S,0}$ ein Referenzwiderstand und
$\alpha$ ein Temperaturkoeffizient ist.

10. Verfahren nach einem der vorherigen Ansprüche, **dadurch gekennzeichnet, dass** der Satz von Motorparametern $(R_S, L_d, L_q, \Psi_{pm})$ für einen konstanten Satz von Signalmerkmalen $(\{x_0, x_{1,sin}, x_{1,cos}\})$ eine Anzahl (n) von Iterationen wiederholt nacheinander berechnet wird, vorzugsweise bis zu zehn Mal.

11. Verfahren nach einem der vorherigen Ansprüche, **dadurch gekennzeichnet, dass** für eine neue Berechnung des Satzes von Motorparametern $(R_S, L_d, L_q, \Psi_{pm})$ nach einer weiteren Periode (T) des Anregungssignals *(f(t))* die bei der vorherigen Periode des Anregungssignals *(f(t))* berechneten Merkmale des Satzes von Motorparametern $(R_S, L_d, L_q, \Psi_{pm})$ als Startwerte verwendet werden oder **dass** für die erstmalige Berechnung des Satzes von Motorparametern $(Rs, L_d, L_q, \Psi_{pm})$ vorgegebene Startwerte für die Motorparameter $(R_S, L_d, L_q, \Psi_{pm})$ verwendet werden.

12. Verfahren nach einem der vorherigen Ansprüche, **dadurch gekennzeichnet, dass** die Stellgröße $(i_d)$ jene Stromkomponente ist, die maßgeblich den magnetischen Fluss im Stator erzeugt, insbesondere der bei einer feldorientierten Regelung des Elektromotors (1) verwendete d-Strom.

13. Verfahren nach einem der vorherigen Ansprüche, **dadurch gekennzeichnet, dass** der Funktionsapproximator (6) ein neuronales Netzwerk ist, insbesondere ein rekurrentes neuronales Netzwerk.

14. Verfahren nach Anspruch 13, **dadurch gekennzeichnet, dass** über wenigstens eine Periode (T) des Anregungssignals *(f(t))* hinweg aus der elektrischen Leistungsaufnahme $(P_{el})$ als weitere Motorgröße (x(t)) ein weiterer Satz $(T_{Pel})$ von Signalmerkmalen $(\{P_{el,0}, P_{el,1,sin}, P_{el,1,cos}\})$ bestimmt wird, bestehend aus dem Gleichanteil $(P_{el,0})$ der elektrischen Leistungsaufnahme $(P_{el})$, dem Betrag der Grundschwingungsamplitude $(P_{el,1,sin})$ der elektrischen Leistungsaufnahme $(P_{el})$ bei der Anregungsfrequenz $(f_A)$ und in Phase mit dem Anregungssignal *(f(t))* sowie dem Betrag der Grundschwingungsamplitude $(P_{el,1,cos})$ der elektrischen Leistungsaufnahme $(P_{el})$ bei der Anregungsfrequenz $(f_A)$ und 90° phasenversetzt zum Anregungssignal *(f(t))*, und dass das neuronale Netzwerk (6) zusätzlich diesen weiteren Satz $(T_{Pel})$ von Signalmerkmalen $(\{P_{el,0}, P_{el,1,sin}, P_{el,1,cos}\})$ verwendet.

15. Verfahren nach Anspruch 13 oder 14, **dadurch gekennzeichnet, dass** das neuronale Netzwerk (6) zusätzlich Messwerte $(\vartheta_1...\vartheta_n)$ von einem oder mehreren Temperatursensoren (7) verwendet, der/ die in der Steuerungselektronik des Elektromotors (1) verbaut ist/ sind oder der die Temperatur eines Fördermediums in einer vom Elektromotor (1) als Nassläufermotor angetriebenen Kreiselpumpe misst.

16. Elektromotor, insbesondere permanentmagnetischer Synchronmotor (1), vorzugsweise als Nassläufermotor eines Kreiselpumpenaggregat, mit einer Steuerungselektronik mit einem Motoregler (2) zur vektoriellen Regelung des Elektromotors (1), der wenigstens einen Prozessor und einen Speicher mit einem darauf gespeicherten Programm umfasst und eingerichtet ist, durch Ausführung des Programms auf dem Prozessor die Statorwicklungstemperatur $(\vartheta_{Stator})$ des Elektromotors (1) gemäß dem Verfahren nach einem der vorherigen Ansprüche zu bestimmen.

Fig. 1

Fig. 3

$$\vartheta_{Stator}$$

Umrechnung Statorwiderstand in Statortemperatur  5

$$R_S$$

$$R_S, L_d, L_q, \Psi_{PM}$$

Berechnung: Motorparameter  4

15 Signalmerkmale:

$$\begin{bmatrix} [u_{d,0}, \ u_{d,1,sin}, \ u_{d,1,cos}] \\ [u_{q,0}, \ u_{q,1,sin}, \ u_{q,1,cos}], \\ [i_{d,0}, i_{d,1,sin}, \ i_{d,1,cos}], \\ [i_{q,0}, i_{q,1,sin}, \ i_{q,1,cos}], \\ [\omega_{el,0}, \ \omega_{el,1,sin}, \ \omega_{el,1,cos}] \end{bmatrix}$$

Berechnung: Gleichanteil und Amplituden  3

$$i_d(t), i_q(t)$$

$$\omega_{el}(t)$$

$$u_d(t), u_q(t)$$

Motorregelung mit periodischer Anregung  2

$$i_a(t), i_b(t), i_c(t)$$

$$u_a(t), u_b(t), u_c(t)$$

Motor  1

q

d

$$\omega_{el} L \ i_s$$

$$j \ \omega_{el} \ \Psi_{pm}$$

$$u_s$$

$$R_s \ i_s$$

```
         S1 ⌐          ┌──────────────┐
                       │  Motorstart  │
                       └──────────────┘
                              │
                              ▼
       ┌────────────────────────────────────────────────────────────┐
   S2 ⌐│ Feldorientierte Regelung mit Strom- und Spannungskomponenten u_d,│
       │     u_q, i_d, i_q und der elektrischen Kreisfrequenz ω_el      │
       └────────────────────────────────────────────────────────────┘
                              │
                              ▼
       ┌────────────────────────────────────────────────────────────┐
       │ Beaufschlagung einer Stellgröße der Regelung mit einem periodischen│ ⌐ S3
       │   Anregungssignal f(t) mit der Anregungsfrequenz f_A          │
       └────────────────────────────────────────────────────────────┘
                              │
                              ▼
       ┌────────────────────────────────────────────────────────────┐
       │ Berechnung von Signalmerkmalen, nämlich des Gleichanteils sowie│
       │  der Amplituden bei der Anregungsfrequenz f_A in Phase mit und 90°│ ⌐ S4a
       │  phasenverschoben zum Anregungssignal für die Strom- und      │
       │  Spannungskomponenten und die elektrische Kreisfrequenz über  │
       │                    zumindest eine Periode                     │
       └────────────────────────────────────────────────────────────┘
                              │
                              ▼
       ┌──────────────────────────────────┐   ⌐ S5
       │   Berechnung von Motorparametern  │
       │ einschließlich dem Statorwiderstand R_S aus│      ◄── ⌐ S6
       │  den Gleichanteilen und den Amplituden │
       └──────────────────────────────────┘
   S8 ⌐                    │         ┌──────────────────────────────────────┐
                           │         │ n Iterationen: berechnete Motorparameter sind│
                           │         │  Startwerte für die nächste Berechnung: │
                           │         └──────────────────────────────────────┘
                           ▼
       ┌──────────────────────────────────┐
       │ Berechnung der Statortemperatur ϑ_Stator aus│  ⌐ S7a
       │  dem Statorwiderstand R_S gemäß einem │
       │  Temperaturmodell ϑ_Stator(R_S)   │
       └──────────────────────────────────┘
```

Fig. 2

**S1** — Motorstart

**S2** — Feldorientierte Regelung mit Strom- und Spannungskomponenten $u_d$, $u_q$, $i_d$, $i_q$ und der elektrischen Kreisfrequenz $\omega_{el}$

**S3** — Beaufschlagung einer Stellgröße der Regelung mit einem periodischen Anregungssignal f(t) mit der Anregungsfrequenz $f_A$

**S4b** — Berechnung von Signalmerkmalen, nämlich des Gleichanteils sowie der Amplituden bei der Anregungsfrequenz $f_A$ in Phase mit und 90° phasenverschoben zu dem Anregungssignal für die Strom- und Spannungskomponenten, die elektrische Kreisfrequenz und die elektrische Leistung über zumindest eine Periode

**S5** — Berechnung von Motorparametern einschließlich dem Statorwiderstand $R_S$ aus den Gleichanteilen und den Amplituden

**S6** — n Iterationen: berechnete Motorparameter sind Startwerte für die nächste Berechnung:

**S7b** — Schätzung der Statortemperatur $\vartheta_{Stator}$ mit einem neuronalen Netzwerk unter Verwendung der Gleichanteile, Amplituden und Motorparameter

**S8**

Fig. 4

EP 4 641 916 A1

15 Signalmerkmale: $\left\{\begin{array}{l} [u_{d,0}, u_{d,1,sin}, u_{d,1,cos}] \\ [u_{q,0}, u_{q,1,sin}, u_{q,1,cos}], \\ [i_{d,0}, i_{d,1,sin}, i_{d,1,cos}], \\ [i_{q,0}, i_{q,1,sin}, i_{q,1,cos}], \\ [\omega_{el,0}, \omega_{el,1,sin}, \omega_{el,1,cos}] \end{array}\right.$

$i_a(t), i_b(t), i_c(t)$

$i_d(t), i_q(t)$

**1**

**Motor**

**2**

**Motorregelung mit periodischer Anregung**

$\omega_{el}(t)$

$P_{el}(t)$

**3**

**Berechnung: Gleichanteil und Amplituden**

**4**

**Berechnung: Motorparameter**

$u_d(t), u_q(t)$

$u_a(t), u_b(t), u_c(t)$

$R_S, L_d, L_q, \Psi_{PM}$

**Fig. 5**

**Integrierte Temperatursensoren**

$\vartheta_1, \ldots, \vartheta_n$

**Neuronales Netzwerk**

$\vartheta_{Stator}$

**7**

**6**

18 Signalmerkmale: $\left\{\begin{array}{l} [u_{d,0}, u_{d,1,sin}, u_{d,1,cos}] \\ [u_{q,0}, u_{q,1,sin}, u_{q,1,cos}], \\ [i_{d,0}, i_{d,1,sin}, i_{d,1,cos}], \\ [i_{q,0}, i_{q,1,sin}, i_{q,1,cos}], \\ [\omega_{el,0}, \omega_{el,1,sin}, \omega_{el,1,cos}] \\ [P_{el,0}, P_{el,1,sin}, P_{el,1,cos}] \end{array}\right.$

Fig. 6

**Europäisches Patentamt**
**European Patent Office**
**Office européen des brevets**

## EUROPÄISCHER RECHERCHENBERICHT

Nummer der Anmeldung

EP 25 17 1515

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 2 894 784 A1 (NISSAN MOTOR [JP])<br>15. Juli 2015 (2015-07-15)<br>* Absatz [0026]; Abbildung 3 *<br>* Absatz [0029] - Absatz [0031] *<br>* Absatz [0032]; Abbildung 4 *<br>* Absatz [0005] *<br>- - - - - | 1-6,<br>10-12<br>13 | INV.<br>H02P21/14<br>H02P23/14<br>H02P29/64 |
| Y | DE 10 2022 211243 B3 (BOSCH GMBH ROBERT [DE]) 14. März 2024 (2024-03-14)<br>* Absatz [0018] *<br>- - - - - | 13 | |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| München | 12. September 2025 | Schürle, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 25 17 1515

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2025

| Im Recherchenbericht angeführtes Patentdokument | Datum der Veröffentlichung | Mitglied(er) der Patentfamilie | Datum der Veröffentlichung |
|---|---|---|---|
| EP 2894784 A1 | 15-07-2015 | CN 104779876 A | 15-07-2015 |
| | | EP 2894784 A1 | 15-07-2015 |
| | | JP 6459286 B2 | 30-01-2019 |
| | | JP 2015133890 A | 23-07-2015 |
| | | US 2015200614 A1 | 16-07-2015 |
| DE 102022211243 B3 | 14-03-2024 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120306422 A1
- EP 2743713 A1
- EP 3076543 A1
- US 20040257011 A1